# EUROPÄISCHE PATENTSCHRIFT

(11) **EP 4 201 538 B1**
(45) Veröffentlichungstag und Bekanntmachung des Hinweises auf die Patenterteilung: **09.04.2025**
(21) Anmeldenummer: 22207106.0
(22) Anmeldetag: 14.11.2022
(51) Int. Cl.: B62J 50/16, B25B 27/00, B08B 1/34, B08B 1/20

(54) **REINIGUNGSVORRICHTUNG FÜR EINE ANTRIEBSKETTE**
DRIVE CHAIN CLEANING APPARATUS
DISPOSITIF DE NETTOYAGE POUR CHAÎNE D'ENTRAÎNEMENT

(30) Priorität: 22.12.2021 DE 202021003846 U
(43) Veröffentlichungstag der Anmeldung: 28.06.2023
(73) Patentinhaber: Monz Handelsgesellschaft International mbH & Co. KG, 54292 Trier (DE)
(72) Erfinder: Cremer, Robert, 54426 Heidenburg (DE)
(74) Vertreter: Seyer & Nobbe Patentanwälte PartmbB

(56) Entgegenhaltungen:
- DE-U1- 202009 013 659
- FR-A1- 3 084 875
- GB-A- 2 308 419
- NL-A- 9 000 343

## Beschreibung

Die Erfindung betrifft eine Reinigungsvorrichtung für eine Antriebskette, insbesondere Fahrradkette, umfassend zumindest ein Gehäuse mit zumindest einer Reinigungsbürste, wobei die wenigstens eine Reinigungsbürste mit einem Kettenzahnrad gekoppelt ist, welches durch eine sich bewegende Antriebskette antreibbar ist, wobei das Kettenzahnrad mit einem weiteren Zahnrad auf einer Welle gekoppelt ist,

Reinigungsvorrichtungen für Antriebsketten werden immer dann benötigt, wenn eine sehr starke Verschmutzung der Antriebsketten auftritt. Speziell bei einer Fahrradkette besteht die Gefahr, dass die offenliegende Fahrradkette bei intensiver Nutzung des Fahrrades in Mitleidenschaft gezogen wird. Hierbei kann es sich beispielsweise um Schmutzanhaftungen handeln, die bei Regenwetter an der Fahrradkette haften bleiben können. Über die verschiedenen Zahnräder verteilt sich diese Verschmutzung, sodass eine vorhandene Gangschaltung schwergängig wird oder eine stärkere Abnutzung der Fahrradkette eintritt. Fahrradketten bestehen aus einer großen Zahl von beweglichen Teilen und bieten somit für Schmutzanhaftungen sehr viele Möglichkeiten. Das Fahren mit einer verschmutzten Kette erfordert hierbei vielmehr Kraft beim Treten und zudem kann durch grobkörnige Verschmutzungen ein vorzeitiger Verschleiß an den relativ teuren Zahnradbaugruppen und Kettenblättern eintreten. Soweit eine Reparatur des Fahrrades erforderlich wird, beispielsweise beim Ausbau des Hinterrades werden die anhaftenden Verschmutzungen einschließlich vorhandener Fettrückstände zusätzlich an weiteren Fahrradkomponenten verteilt. Ferner gestaltet sich die Reparatur eines Fahrrades nicht nur schwierig, sondern ist mit einer Vielzahl von Verunreinigungen, beispielsweise auch den Händen verbunden. Neben Schmutzanhaftungen können auch Metallteile oder ein Metallabrieb an einer Fahrradkette haften bleiben, weil die Fahrradketten in der Regel mit einem Fettfilm versehen sind.

Um einen vorzeitigen Verschleiß zu vermeiden ist daher eine regelmäßige Wartung der Kette für jeden Radfahrer von größter Bedeutung. Zur Fahrradkettenpflege gehört neben dem Reinigen auch das Endfetten der Kette und das regelmäßige Auftragen eines geeigneten Schmiermittels. Durch das Entfetten wird erreicht, dass das alte Schmiermittel und die Ansammlungen von Schmutz, Split und eventuellen Metallspänen entfernt werden. Soweit eine solche Reinigung nicht durchgeführt wird und mit weiteren Schmiermitteln eine verschmutzte Kette bedacht wird, werden Schmutz und Split nur weiter in die Kettenkomponenten gedrückt und der Verschleiß beschleunigt.

Dadurch, dass eine Fahrradkette aus einer Vielzahl von einzelnen Gliedern besteht, ist es hierbei darauf zu achten, dass die Reinigung im Seitenbereich der Kettenglieder und zwischen den einzelnen Kettengliedern gründlich erfolgt.

Ein Verschleiß tritt hierbei regelmäßig auf der Innenseite des Kettengliedes an der Schnittstelle zwischen einem Bolzen und einer vorhandenen Buchse auf, welche die Beweglichkeit der Fahrradkette sicherstellen sollen. Somit ist beispielsweise das manuelle Auftragen von Entfetter auf der Außenseite und das Abwischen der Außenseite mit dem Lappen nicht effektiv, weil bei dieser Reinigungsmethode der Schmutz in die Stifte und Buchsen gedrückt wird sowie in die Ritzen und Spalten der Fahrradkette, wodurch die Schmutzpartikel haften bleiben und damit auch ein vorzeitiger Verschleiß der Fahrradkette eintreten kann. Fahrradketten sind insbesondere bei E-Bikes sehr hohen Beanspruchungen ausgesetzt, weil eine hohe Kraftübertragung durch den Elektromotor erfolgt und somit bei einem E-Bike der Fahrradkette eine hohe Bedeutung zukommt. Im Weiteren kommt hinzu, dass das verwendetes Fahrradkettenfett extrem hartnäckig sein kann und eine manuelle Reinigung eine besonders schmutzige Arbeit ist, welche gegebenenfalls auch mit einer Verschmutzung der Umgebung, insbesondere des Erdreiches verbunden ist. Darüber hinaus ist das manuelle Reinigen der Kette mit einem erheblichen Zeitaufwand verbunden, weil in den meisten Fällen die Kette ausgebaut und separat gereinigt wird. Der Ausbau der Fahrradkette und spätere Einbau ist mit erheblichem Zeitbedarf verbunden, zudem ist nicht jeder Fahrradfahrer in der Lage beispielsweise das Hinterrad wieder so einzubauen, dass eine sichere Funktion und Langlebigkeit der vorhandenen Bauteile gegeben ist.

Nach erfolgter Reinigung der Fahrradkette ist es erforderlich, dass die Kette erneut eine Schmierung erhält, um die Reibung und somit den Verschleiß zu verringern. In diesem Fall kommt es wieder auf die zu schmierenden Teile der Schnittstelle zwischen Stift und Buchsen an.

Aus der gattungsgemäßen GB 2 308 419 A ist eine Reinigungsvorrichtung bekannt, welche über ein Kettenzahnrad ein erstes Zahnrad mit Reinigungsborsten antreibt und dieses zum Antrieb eines weiteren Zahnrades mit Reinigungsborsten verwendet wird.

Aus der NL 9 000 343 A ist eine Reinigungsvorrichtung bekannt, welche auf einer Welle sowohl ein Kettenzahnrad als auch zwei weitere Zahnräder aufweist, die zum Antrieb der Reinigungsbürsten vorgesehen sind.

Aus der DE 20 2009 013659 U1 ist ein Kettenreinigungsgerät bekannt, welches auf einer gemeinsamen Welle ein Kettenzahnrad mit zwei Kegelzahnrädern aufweist, die wiederum zum Antrieb zweiter Reinigungsborsten vorgesehen sind. Weitere Reinigungsborsten werden über ein zweites Kettenzahnrad ggf. angetrieben.

Aus der FR 3 084 875 A1 ist eine Kettenreinigungsvorrichtung bekannt, die über ein Kettenzahnrad zum Antrieb mehrerer hintereinander geschalteter Zahnräder vorgesehen ist, wobei einige der Zahnräder mit Reinigungsborsten ausgestattet sind.

Die Reinigungsvorrichtungen für Fahradketten weisen eine Vielzahl von Einzelkomponenten, insbesondere Zahnrädern auf, die den Aufbau äußerst kompliziert gestalten und einen erheblichen Einsatz von Ressourcen benötigen.

Der vorliegenden Erfindung liegt daher die Aufgabe zugrunde, einer Reinigungsvorrichtung aufzuzeigen, welche mit geringstmöglichem Aufwand eine zuverlässige Reinigung einer Fahrradkette ermöglicht und zudem eine Verschmutzung der Umgebung, insbesondere des Bodenbereiches vermeidet.

Erfindungsgemäß ist zur Lösung der Aufgabenstellung vorgesehen, dass das weitere Zahnrad zum Antrieb zweier Zahnräder vorgesehen ist und mit diesen kämmt, welche synchron mit jeweils einer Reinigungsbürste gekoppelt sind. Weitere vorteilhafte Ausgestaltungen der Erfindung ergeben sich aus den Unteransprüchen.

Der besondere Vorteil der vorliegenden Reinigungsvorrichtung besteht darin, dass ein Kettenzahnrad verwendet wird, welches über die sich bewegende Antriebskette antreibbar ist. Dies kann beispielsweise dadurch geschehen, dass die Reinigungsvorrichtung auf die Fahrradkette aufgesetzt wird und die Fahrradkette bewegt wird. Zu diesem Zweck kann beispielsweise das Hinterrad angehoben oder das Fahrrad aufgehängt werden, sodass ein Freilauf der Fahrradkette ohne Bodenkontakt der Reifen möglich ist. Nach mehrmaligem Durchlaufen der Fahrradkette durch die Reinigungsvorrichtung ist die Fahrradkette von Schmutz gereinigt, wobei unter Umständen auch Entfettungsmittel oder Reinigungsmittel eingesetzt werden können, um vorhandene Rückstände einer früheren Einfettung zu beseitigen, bevor die Kette erneut eingefettet wird. Zu diesem Zweck ist das Kettenzahnrad mit einer Reinigungsbürste gekoppelt, sodass bei einer Bewegung des Kettenzahnrades auch die Reinigungsbürste in eine Drehbewegung versetzt wird. Die wenigstens eine Reinigungsbürste gleitet somit drehend entlang der Fahrradkette, um eine optimale Reinigung durchzuführen. Die Borsten, die eine solche Reinigungsbürste aufweist, können hierbei nicht nur den seitlichen Bereich der Fahrradkette, sondern auch den mittleren Bereich erfassen, das heißt die Borsten dringen zwischen die einzelnen Segmente einer Gliederkette ein und können sämtliche anhaftenden Verschmutzungen entfernen. Bei besonders hartnäckig verschmutzten Fahrradketten ist ein mehrmaliges Durchlaufen der Fahrradkette durch die Reinigungsvorrichtung erforderlich, sodass mit Sicherheit sämtliche anhaftenden Schmutzpartikel entfernt werden. Durch die Kopplung zwischen Kettenzahnrad und Reinigungsbürste besteht der besondere Vorteil, dass kein externer Antrieb verwendet werden muss, um die Fahrradkette zu bewegen. Es reicht nach dem Anheben des Hinterrades oder Aufhängen des Fahrrades aus, wenn manuell eine Pedale bewegt wird, wodurch die Fahrradkette mehrmals durch die Reinigungsvorrichtung durchgezogen werden kann. Das Kettenzahnrad wird hierbei in Drehung versetzt und überträgt diese Drehung auf die Reinigungsbürste, sodass die vorhandenen Borsten der Reinigungsbürste jede Fläche der Fahrradkette erreichen.

Soweit von wenigstens einer Reinigungsbürste ausgegangen wird, besteht die Möglichkeit mehrere Reinigungsbürsten durch das Kettenzahnrad anzutreiben, die alle mit dem Kettenzahnrad gekoppelt sind, sodass sowohl eine seitliche Reinigung, als auch eine Reinigung zwischen den einzelnen Kettengliedern erfolgen kann.

In Ausgestaltung der Erfindung ist vorgesehen, dass das Kettenzahnrad mit wenigstens einem weiteren Zahnrad gekoppelt ist, welches zum Antrieb zumindest einer Reinigungsbürste vorgesehen ist. In einer ersten Ausführung reicht es aus, wenn das Kettenzahnrad mit wenigstens einem weiteren Zahnrad gekoppelt ist, vorzugsweise auch mit mehreren weiteren Zahnrädern, die zum Antrieb der Reinigungsbürste verwendet werden. Im Weiteren besteht die Möglichkeit, dass das wenigstens eine Zahnrad mit weiteren Zahnrädern gekoppelt ist, welche ebenfalls zum Antrieb zumindest einer weiteren Reinigungsbürste vorgesehen sind, sodass ein mehrstufiges Reinigungsverfahren mithilfe der Reinigungsbürsten durchführbar ist.

Alternativ, aber nicht beansprucht, besteht die Möglichkeit, dass das Kettenzahnrad und die wenigstens eine Reinigungsbürste, gegebenenfalls mehrere Reinigungsbürsten, auf einer Welle angeordnet sind, wodurch ein direkter Antrieb der Reinigungsbürsten erfolgt. Zusätzlich besteht die Möglichkeit, dass die angetriebenen Zahnräder und Reinigungsbürsten ebenso auf einer gemeinsamen Welle angeordnet sind, sodass über das Kettenzahnrad nicht nur die Zahnräder, sondern auch gleichzeitig die Reinigungsbürsten angetrieben werden.

Um eine flachbauende Reinigungsvorrichtung zu erreichen, die gegebenenfalls auch in mehrstufiger Anordnung Reinigungsbürsten aufweist, sind die Reinigungsbürsten gegebenenfalls als Zahnrad mit einer Stirnradverzahnung ausgebildet, wobei die Stirnradverzahnung mit einer Verzahnung des Kettenzahnrades kämmt.

In besonderer Ausgestaltung der Erfindung ist vorgesehen, dass das Kettenzahnrad eine doppelte Verzahnung aufweist, einmal für die Antriebskette und einmal für zumindest ein gekoppeltes Zahnrad, oder dass das Kettenzahnrad und zumindest ein Zahnrad auf einer gemeinsamen Welle angeordnet sind. Soweit die Welle nicht nur das Kettenzahnrad trägt, sondern auch ein Zahnrad wird vorzugsweise ebenfalls eine Stirnradverzahnung verwendet, um die durch die Fahrradkette erzeugte Kraft über das Kettenzahnrad auf weitere Zahnräder zu übertragen. Alternativ besteht die wiederum die Möglichkeit, dass das Kettenzahnrad und zumindest ein weiteres Zahnrad auf einer gemeinsamen Welle angeordnet sind. In diesem Fall erhalten sämtliche Zahnräder vorzugsweise eine Stirnradverzahnung, um eine flachbauende Einheit der Reinigungsvorrichtung zu ermöglichen. Die Reinigungsvorrichtung wird hierbei in einem Gehäuse aufgenommen, in dem die einzelnen Zahnräder und das Kettenzahnrad drehbar gelagert sind und eine feste Zuordnung zueinander aufweisen, wobei über das Kettenzahnrad eine direkte Kopplung mit einem weiteren Zahnrad, aber ebenso eine zusätzlich indirekte Kopplung von einem Zahnrad zu einem nächsten Zahnrad möglich ist.

Die Fahrradkette muss zur Reinigung durch das Gehäuse geführt werden. Aus diesem Grunde ist das Gehäuse mit einer Ein- und Austrittsöffnung ausgestattet, durch welche die Fahrradkette in das Gehäuse gelangt. Zum Aufsetzen des Gehäuses auf die Fahrradkette weist dieses vorzugsweise eine horizontale Trennungslinie auf, sodass zwei Gehäusehälften vorliegen. Die Trennungslinie durchläuft hierbei auch die Ein- und Austrittsöffnung, sodass eine untere Hälfte des Gehäuses an die Fahrradkette angelegt werden kann und die zweite obere Hälfte des Gehäuses auf das erste Gehäuseteil aufgesetzt wird und damit die Fahrradkette zwischen beiden Gehäusehälften zu liegen kommt. Der Reinigungsvorgang wird hierbei erst dann gestartet, wenn die beiden Gehäusehälften miteinander verbunden sind. Um einen sicheren Halt der beiden Gehäusehälften zu gewährleisten ist im Weiteren vorgesehen, dass das Gehäuse einen Klemmbügel zur Verbindung der beiden Gehäusehälften aufweist. Ein solcher Klemmbügel kann seitlich an dem Gehäuse verschwenkbar angebracht werden und ist an einer Gehäusehälfte drehbeweglich gelagert, während der Klemmbügel mit einem gebogenen freien Ende die zweite Gehäusehälfte umklammert und damit für ausreichend Spannung sorgt, sodass die beiden Gehäusehälften zusammengehalten werden.

Um die Handhabung der Reinigungsvorrichtung zu erleichtern ist ferner vorgesehen, dass ein Griff verwendet wird und das Gehäuse eine Aussparung für einen einsetzbaren Griff aufweist. Der Griff kann im einfachsten Fall eine einstückig angeformte, beispielsweise rechteckförmige Stirnfläche aufweisen, welche in eine größenmäßig angepasste Aussparung der beiden Gehäusehälften eingreift, sodass mithilfe des Griffes das Gehäuse gegenüber der Fahrradkette in einer festen Position manuell gehalten werden kann.

In weiterer Ausgestaltung der Erfindung ist vorgesehen, dass das Gehäuse eine Öffnung zur Zuführung eines Reinigungsmittels und/oder eines Schmiermittels aufweist. Eine solche Öffnung ist vorteilhafterweise im oberen Kantenbereich des Gehäuses angeordnet, sodass nach einer ersten Grobreinigung beispielsweise das Reinigungsmittel hinzugegeben werden kann, und zwar eine begrenzte Menge, welche durch das Gehäuse aufgefangen wird. Nach erfolgter weiterer Reinigung sammelt sich somit das Reinigungsmittel einschließlich der Schmutzpartikel im unteren Bereich des Gehäuses und kann zu einem späteren Zeitpunkt entsorgt werden. Durch die gleiche Öffnung besteht nach erfolgter Reinigung der Fahrradkette die Möglichkeit ein Schmiermittel, beispielsweise ein Fett zuzuführen, um die Kette gleichmäßig einzufetten, bevor das Gehäuse durch öffnen des Klemmbügels wieder in zwei Hälften zerlegt wird, um einerseits die Gehäusehälften zu reinigen, aber auch die Entfernung des Gehäuses von der Fahrradkette zu ermöglichen.

Das Gehäuse kann hierbei mit einer bis zu dreistufigen Anordnung der Reinigungsbürsten ausgestattet sein, um eine intensive Reinigung der Fahrradkette zu ermöglichen.

Der besondere Vorteil der vorliegenden Erfindung besteht darin, dass mithilfe der Reinigungsvorrichtung eine Fahrradkette optimal von großen und feinen Verschmutzungen gereinigt und beispielsweise eine Entfettung der Kette vorgenommen werden kann und nachdem sämtliche Schmutzpartikel und Fettrückstände beseitigt wurden, kann anschließend eine Neueinfettung der Fahrradkette erfolgen. Vorhandene Schmutzpartikel und Fette können innerhalb des Gehäuses aufgefangen werden, sodass keine Umweltbelastung eintritt und zudem ermöglicht die Reinigungsvorrichtung einen Bediener die Fahrradkette zu reinigen, ohne dass er selbst eine Verschmutzung der Hände erfährt. Die Reinigungsvorrichtung ermöglicht hierbei in einer einfachen Ausführung die Verwendung einer Reinigungsbürste in einer einstufigen Anordnung, aber ebenso eine mehrstufige Anordnung mit zwei oder drei Reinigungsstufen, welche alle gemeinsam mit einem Kettenrad gekoppelt sind, sodass die Bewegung der Kette durch das Gehäuse zu einer Drehbewegung sämtlicher Reinigungsbürsten führt. Erst durch die Drehbewegung wird erreicht, dass die Fahrradkette im Seitenbereich und auch zwischen den einzelnen Gliedern optimal gereinigt wird.

Die Erfindung wird im Nachfolgenden anhand der Figuren nochmals erläutert.

Es zeigt
- Fig. 1: in einer perspektivischen Ansicht eine Reinigungsvorrichtung mit einem separaten Handgriff,
- Fig. 2: in einer perspektivischen Ansicht eine weitere Ansicht der Reinigungsvorrichtung gemäß Figur 1,
- Fig. 3: in einer perspektivischen Ansicht die Reinigungsvorrichtung gemäß Figur 1 mit eingesetztem Handgriff und eingelegter Fahrradkette,
- Fig. 4: in einer perspektivischen Ansicht die geöffnete Reinigungsvorrichtung,
- Fig. 5: in drei Seitenansichten und einer perspektivischen Ansicht nochmals die zusammengebaute Reinigungsvorrichtung gemäß Figur 1,
- Fig. 6: in einer perspektivischen Ansicht eine weitere Ausführungsvariante der Reinigungsvorrichtung mit einem separaten Klemmbügel,
- Fig. 7: in einer perspektivischen Ansicht eine geöffnete Ansicht der Reinigungsvorrichtung gemäß Figur 6,
- Fig. 8: in einer perspektivischen Explorationsansicht die Reinigungsvorrichtung gemäß Figur 6,
- Fig. 9: in einer perspektivischen Ansicht die Reinigungsvorrichtung gemäß Figur 6 mit eingelegter Fahrradkette und
- Fig. 10: in mehreren Ansichten die Reinigungsvorrichtung gemäß Figur 6.

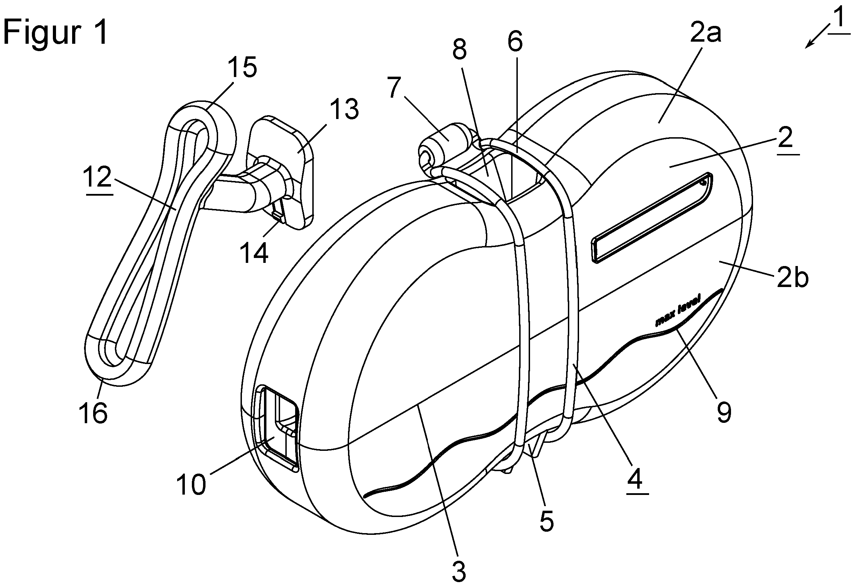

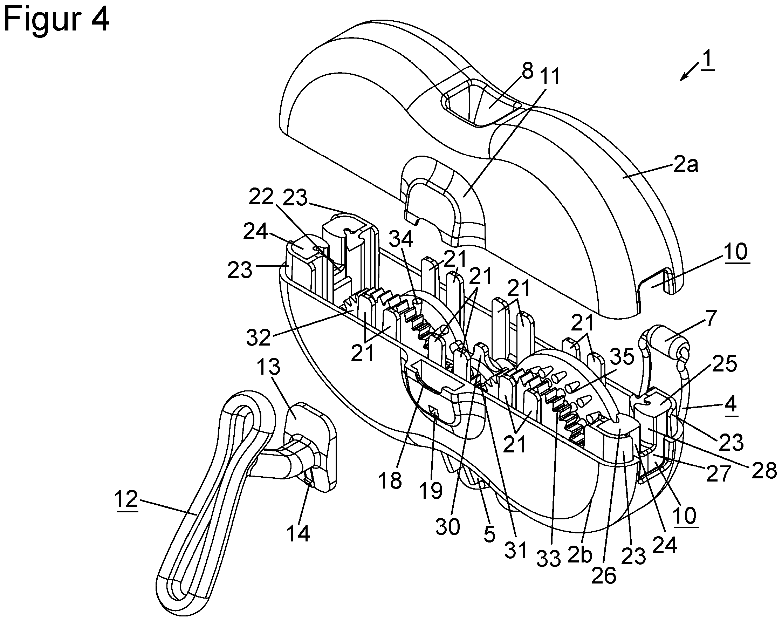

Figur 1 zeigt in einer perspektivischen rückwärtigen Ansicht eine Reinigungsvorrichtung 1 für eine Antriebskette, beispielsweise einer Fahrradkette. Die Reinigungsvorrichtung weist ein Gehäuse 2 auf, welches die äußere Form einer Acht besitzt und aus zwei Gehäusehälften 2a und 2b besteht. Die Trennungslinie 3 der beiden Gehäusehälften 2a, 2b verläuft entlang der größten Gehäuseabmessung. Die beiden Gehäusehälften 2a und 2b können über Führungselemente zusammengefügt werden, sodass diese flächenbündig aufeinanderliegen. Die Führungselemente sind beispielsweise aus der Figur 4 ersichtlich. Mithilfe eines Klemmbügels 4 werden die beiden Gehäusehälften 2a, 2b zusammengehalten, wobei der Klemmbügel 4 in der unteren Gehäusehälfte 2b schwenkbeweglich in einer Aufnahme 5 gehalten ist und korrespondierende Abmessungen zu den beiden Gehäusehälften 2a, 2b aufweist, sodass der obere Teil des Klemmbügels 4 mit einer Wölbung 6 die obere Gehäusehälfte 2a umgreift. Hierbei besteht der Klemmbügel 4 aus zwei parallel verlaufenden und beabstandeten Drahtelementen die so stabil sind, dass die beiden Gehäusehälften 2a, 2b sicher zusammengepresst werden. Am oberen Ende des Klemmbügels 4 befindet sich eine Rolle 7, welche die Bewegung des Klemmbügels 4 über die obere Gehäusehälfte 2a durch ein Abrollen auf der Gehäuseoberfläche erleichtert, um die erforderliche Spannung zum Zusammenhalt der beiden Gehäusehälften 2a, 2b zu gewährleisten. Zwischen den beiden Drähten des Klemmbügels 4 ist im oberen Bereich eine muldenförmige Öffnung 8 angeordnet, welche beispielsweise die Zugabe eines Reinigungsmittels oder ein Mittel zum Einfetten der Kette ermöglicht. Soweit die Zugabe eines Reinigungsmittels erfolgt geschieht dies bis zu einem Flüssigkeitslevel 9, sodass die Reinigungsbürsten durch die vorhandene Reinigungsflüssigkeit benetzt werden können. Die beiden Gehäusehälften 2a, 2b weisen ferner eine Eingangsöffnung 10 und eine in dieser Ansicht nicht erkennbare Ausgangsöffnung 11 auf, welche die Durchführung einer Fahrradkette ermöglicht. Zum Aufsetzen der Reinigungsvorrichtung 1 auf eine Fahrradkette wird der Klemmbügel 4 vom Gehäuse 2 entfernt, sodass die beiden Gehäusehälften 2a, 2b auseinandergezogen werden können. Nach dem Einlegen der Fahrradkette kann das obere Gehäuseteil 2a auf das untere Gehäuseteil 2b aufgesetzt werden und anschließend der Klemmbügel 4 über das obere Gehäuseteil 2a unter Unterstützung der Rolle 7 und der Krafteinwirkung bewegt werden, sodass die beiden Gehäusehälften 2a und 2b miteinander verpresst werden.

Die Reinigungsvorrichtung 1 wird über einen Griff 12 gehalten, welcher mit einer plattenförmigen Anformung 13 in eine korrespondierende Aussparung des Gehäuses 2 eingesetzt wird. Die Einsetzung erfolgt hierbei vor dem Einlegen der Fahrradkette, sodass nach dem Zusammenfügen der beiden Gehäusehälften 2a, 2b, der Griff 12 fest mit dem Gehäuse 2 verbunden ist. Über eine Rastnase 14 rastet der Griff 12 in eine vorhandene Nut des unteren Gehäuseteils 2b ein, sodass ein sicherer Halt gewährleistet ist und spätestens nach dem Aufsetzten des oberen Gehäuseteils 2a, der Griff 12 fest verankert ist. Die Form des Griffs 12 ähnelt ebenfalls einer langgezogenen Acht mit einer oberen Rundung 15 und einer unteren Rundung 16.

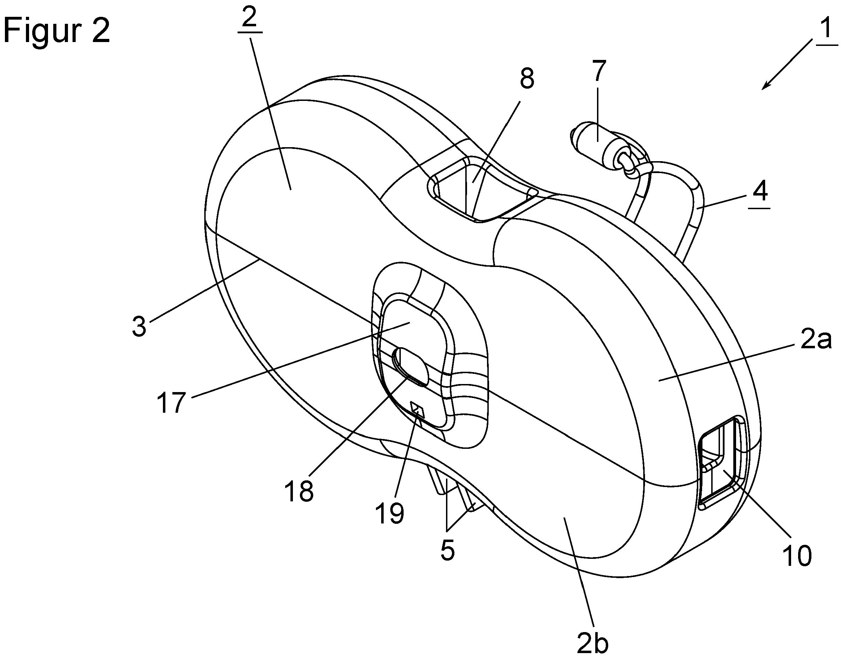

Figur 2 zeigt in einer weiteren perspektivischen Ansicht die Reinigungsvorrichtung 1 und zwar diesmal von der Vorderseite. Die Reinigungsvorrichtung 1 weist das Gehäuse 2 mit den beiden Gehäuseteilen 2a und 2b, einen Klemmbügel 4 und eine Eingangsöffnung 10 sowie eine aus dieser Ansicht nicht erkennbare Ausgangsöffnung 11 für die Fahrradkette auf. Die beiden Gehäusehälften 2a, 2b sind entlang der Trennungslinie 3 unterteilt und ermöglichen nach Entfernen des Klemmbügel 4 das auseinanderziehen der beiden Gehäusehälften 2a, 2b, sodass die Fahrradkette eingelegt werden kann. Nachdem die beiden Gehäusehälften 2a, 2b wieder zusammengefügt wurden, kann der Klemmbügel 4 mithilfe der Rolle 7 über das obere Gehäuseteil 2 geführt und verspannt werden, sodass ein sicher Halt besteht. Bevor eine solche Verspannung erfolgt wird in eine wulstförmige Erhebung 17 mit Öffnung 18 der Griff 12 eingeführt. Der Griff 12 rastet mit einem Rastnase 14 in eine vorhandene Ausnehmung 19 ein, sodass er einerseits in der unteren Gehäusehälfte 2b gehalten wird und nachdem die obere Gehäusehälfte 2a aufgesetzt wurde somit eine feste Verbindung mit dem Gehäuseteil 2a ermöglicht.

Die Funktionsweise ist derart, dass mit dem Einlegen der Fahrradkette beiziehungsweise dem Anlegen der Reinigungsvorrichtung 1 an die Fahrradkette im Anschluss die Fahrradkette ohne externen Antrieb manuell durch das Gehäuse 2 durch eine Bewegung der Pedalen hindurchgeführt wird und aus dieser Ansicht nicht erkennbaren Bürsten gereinigt werden kann.

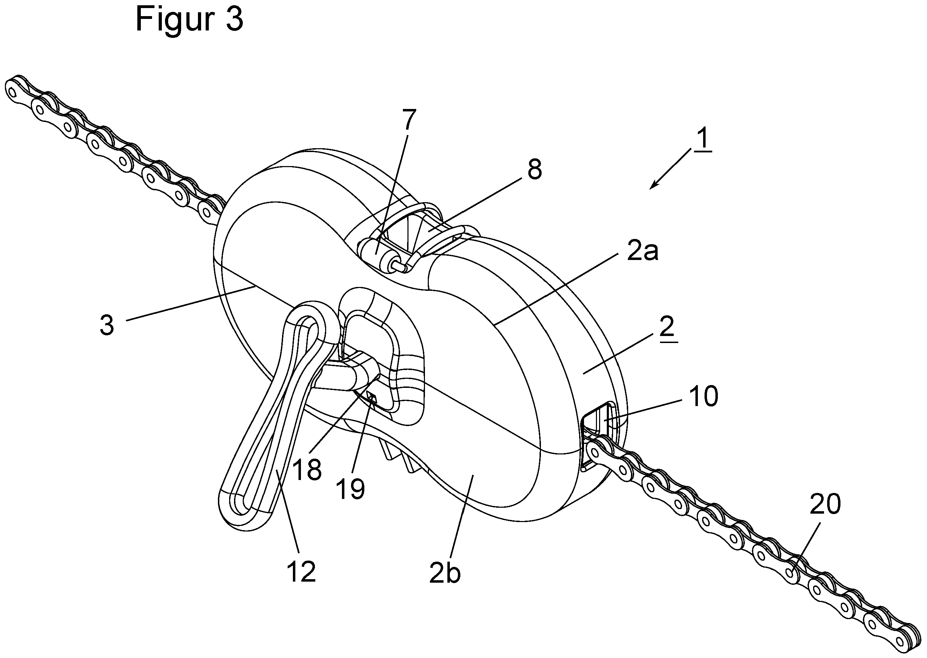

Figur 3 zeigt in einer perspektivischen Ansicht nochmals die Reinigungsvorrichtung 1 in diesem Fall mit eingelegter Fahrradkette 20 und einliegenden Griff 12 in der vorhandenen Aussparung 18.

Figur 4 zeigt in der perspektivischen Ansicht die geöffnete Reinigungsvorrichtung 1 und zwar insoweit, dass die obere Gehäusehälfte 2a von der unteren Gehäusehälfte 2b abgehoben ist. Nachdem der Klemmbügel 4 von der oberen Gehäusehälfte entfernt wurde und somit nur noch eine schwenkbewegliche Verbindung mit der unteren Gehäusehälfte 2b besteht.

Die untere Gehäusehälfte 2b ist zur besseren Zusammenführung der beiden Gehäuseteile 2a und 2b im rückwärtigen Bereich mit nach oben zeigenden Stegen 21 ausgestattet, welche in entsprechende Vertiefungen der oberen Gehäusehälfte 2a eingreifen. Im Bereich der Eingangsöffnung 10 beziehungsweise der Ausgangsöffnung 11 ist im gezeigten Ausführungsbeispiel ein Kettenzahnrad 30 vorhanden, welches mit der eingelegten Fahrradkette kämmt beziehungsweise beim Durchziehen der Fahrradkette bewegt wird. Das Kettenzahnrad 30 befindet sich auf einer Welle, welches ein weiteres Zahnrad 31 trägt. Alternativ besteht auch die Möglichkeit, dass das Kettenzahnrad 30 und das Zahnrad 31 einstückig hergestellt sind und über eine Welle drehbar in der unteren Gehäusehälfte 2b gelagert ist. Das Zahnrad 31 kämmt mit zwei weiteren Zahnrädern 32, 33. Dadurch, dass die beiden Zahnrädern 32, 33 deutlich größer gegenüber dem Zahnrad 31 sind, liegt somit eine Untersetzung vor. Die Zahnrädern 32, 33 sind auf einer nicht sichtbaren Welle gelagert und mit Reinigungsbrüsten 34, 35 gekoppelt. Die Kopplung erfolgt insofern, dass die Reinigungsbürsten 34, 35 synchron mit den Zahnrädern 32, 33 laufen.

Beim Durchzug der Fahrradkette 20 wird somit über das Kettenzahnrad 30 und das Zahnrad 31 die Drehbewegung auf die beiden größeren Zahnrädern 32, 33 übertragen und damit die Reinigungsbürsten 34, 35 in Bewegung versetzt. Die Reinigungsbürsten 34, 35 sind auf der gemeinsamen Welle jeweils paarweise angeordnet, sodass der Seitenbereich beider Seiten der Fahrradkette gereinigt werden kann und ebenso der Zwischenbereich. Alternativ besteht auch die Möglichkeit, dass die Zahnräder 32, 33 unmittelbar mit Reinigungsborsten bestückt sind.

Das Ausführungsbeispiel weist somit zwei Reinigungsstufen auf, die gegebenenfalls durch weitere Reinigungsstufen ergänzt werden können. Diese Ergänzung könnte beispielsweise in der Form erfolgen, dass die Zahnräder 32, 33 mit weiteren Zahnrädern kämmen, die wiederum synchron mit Reinigungsbürsten gekoppelt sind.

Der besondere Vorteil der Reinigungsvorrichtung 1 besteht darin, dass eine flachbauende Gehäuseform vorliegt, welche die Möglichkeit bietet eine Fahrradkette durch das Gehäuse 2 hindurchzuführen und mithilfe der Fahrradkette gleichzeitig ein Kettenzahnrad 30 angetrieben wird, welches wiederum mit weiteren Zahnrädern 32, 33 gekoppelt ist, um einen Antrieb für die Reinigungsbürsten 34, 35 zu realisieren. Während die Fahrradkette somit durch das Gehäuse 2 hindurchgleitet, wird der Seitenbereich und der Zwischenberiech der Fahrradkette 20 mithilfe der Reinigungsbürsten 34 ,35 gereinigt, wobei bei sehr starker Verschmutzung über die Aussparung 8 in der oberen Gehäusehälfte 2a Reinigungsflüssigkeit zugeführt werden kann. Nachdem die Reinigung erfolgt ist, kann ebenfalls über die Aussparung 8 ein fettendes Mittel zugeführt werden, um die Fahrradkette einzufetten. Der besondere Vorteil der Reinigungsvorrichtung 1 liegt hierbei darin, dass Verschmutzungen nach außen hin, das heißt zum Bodenbereich vermieden werden ebenso erfolgt keine Verschmutzung der Hände des Bedieners der Reinigungsvorrichtung 1, sodass der ganze Reinigungsvorgang als sehr sauber betrachtet werden kann. Nachdem die Fahrradkette gereinigt wurde, kann nach Lösen des Klemmbügels 4 das obere Gehäuseteil 2a abgenommen werden und im Anschluss kann das untere Gehäuseteil 2b ebenfalls von der Kette entfernt werden. Die vorhandene Reinigungsflüssigkeit im unteren Gehäuseteil 2b kann ausgeschüttet werden, um die Reinigungsvorrichtung 1 für einen weiteren Gebrauch zur Seite legen zu können.

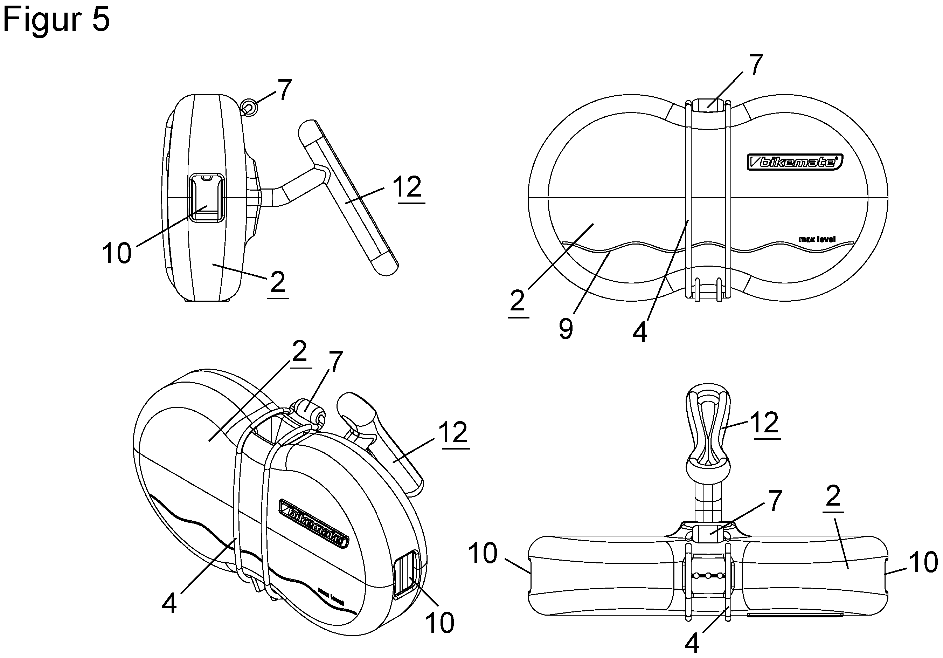

Figur 5 zeigt in drei Seitenansichten und einer perspektivischen Ansicht nochmals die Reinigungsvorrichtung 1 in zusammengebauter Form mit dem Gehäuse 2 beziehungsweise den beiden Gehäuseteilen 2a und 2b, dem Griff 12 sowie dem Klemmbügel 4 und der Eingangsöffnung 10 sowie Ausgangsöffnung 11 für die Fahrradkette.

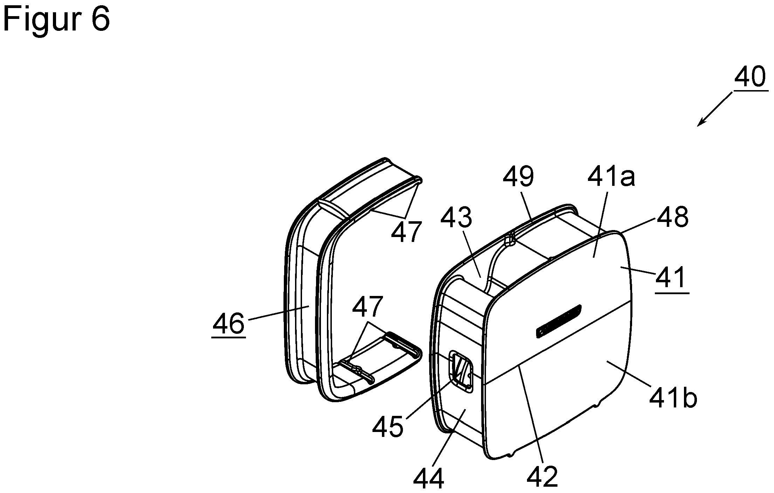

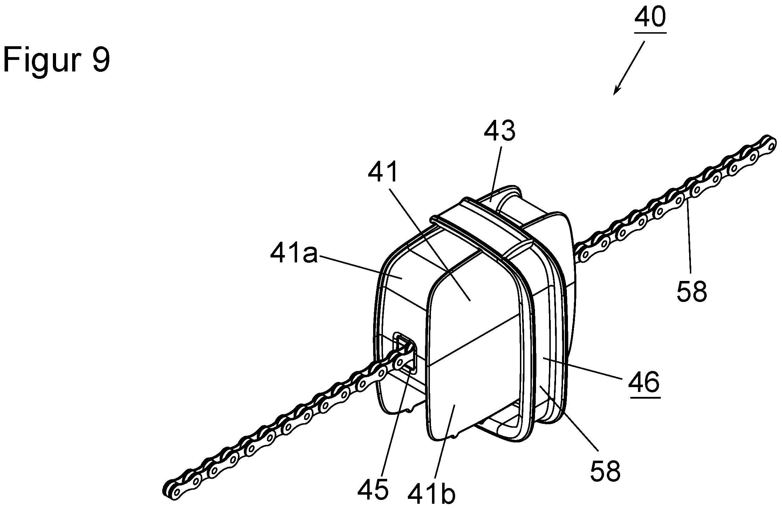

Figur 6 zeigt in einer perspektivischen Ansicht eine weitere Ausführungsform einer Reinigungsvorrichtung 40 mit einem Gehäuse 41, welches ebenfalls aus zwei Gehäusehälften 41a und 41b besteht. Die beiden Gehäusehälfte 41a und 41b weisen eine Trennungslinie 42 auf. Das Gehäuse 41 besitzt eine nahezu quadratische Bauform mit zwei Gehäusehälften 41a, 41b, wobei die obere Gehäusehälfte 41a eine Einfüllöffnung 43 für ein Reinigungsmittel oder ein Schmiermittel aufweist. In der seitlichen Stirnfläche 44 befindet sich eine Öffnung 45, die auf der gegenüberliegenden Seite ebenfalls vorhanden ist, um eine Kette, insbesondere eine Fahrradkette hindurchzuführen. Ein Klemmbügel 46 ist U-förmig ausgebildet und umgreift die beiden Gehäusehälften 41a, 41b, wie aus Figur 9 ersichtlich. Mithilfe des Klemmbügels 46 wird eine Druckspannung aufgebaut, die die beiden Gehäusehälften 41a, 41b während des Reinigungsprozesses zusammenhält. Um einen sicheren Halt des Klemmbügels 46 zu gewährleisten ist dieser mit Einrastvertiefungen 47 ausgestattet, die die äußeren Kanten 48, 49 des Gehäuses 41 einrastend aufnehmen.

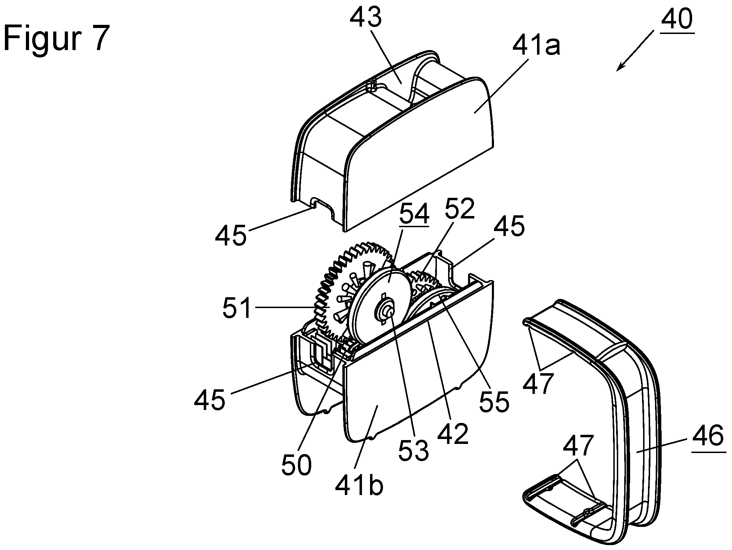

Figur 7 zeigt in einer perspektivischen geöffneten Ansicht die Reinigungsvorrichtung 40 mit einer oberen Gehäusehälfte 41a und einer unteren Gehäusehälfte 41b. Die Öffnung 45 ist durch die Trennungslinie 42 unterteilt, sodass die obere Gehäusehälfte 41a und die untere Gehäuse 41b jeweils einen Teil der Öffnung 45 in Form einer U-förmigen Ausnehmung aufweisen. Im Gehäuse 41 befindet sich ein Kettenzahnrad 50, welches als Doppelzahnrad ausgebildet ist und einerseits mit der in Figur 9 dargestellten Kette kämmt und andererseits eine Stirnradverzahnung aufweist, die mit Zahnrädern 51, 52 kämmt. Die beiden Zahnräder 51, 52 sind jeweils mit einer Drehachse 53, 56 beziehungsweise Welle drehfest verbunden, wobei sich auf der Drehachse 53, 56 zusätzlich eine Reinigungsbürste 54, 55 befindet. Der Antrieb der beiden Zahnräder 51, 52 erfolgt durch das Kettenzahnrad 50, sodass mit einer Drehung der Zahnräder 51, 52 gleichzeitig die Reinigungsbürsten 54, 55 in eine Drehbewegung versetzt werden und beim Durchlaufen der Fahrradkette diese sowohl von oben als auch von unten gereinigt wird. Zu diesem Zweck ist das Zahnrad 51 in einer erhöhten Position oberhalb der Fahrradkette und das Zahnrad 52 in einer tieferliegenden Position unterhalb der Fahrradkette angeordnet.

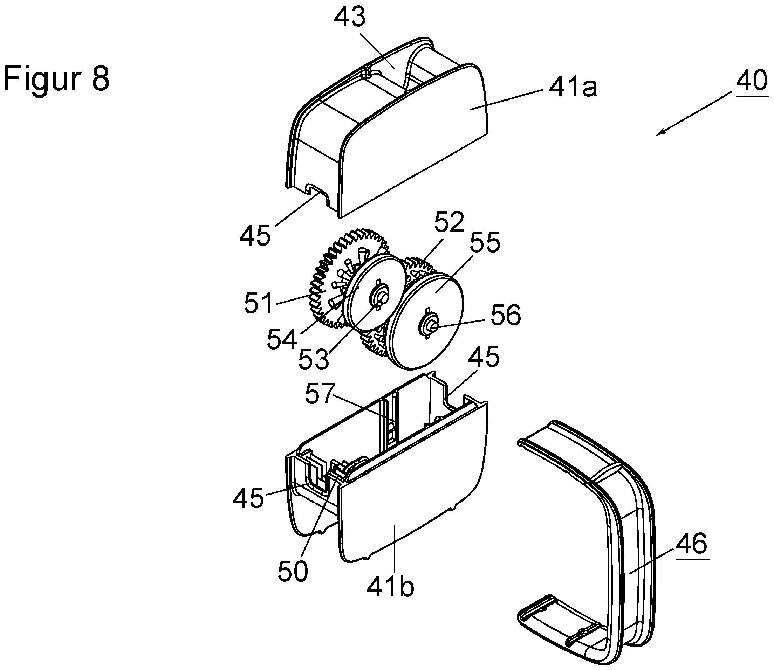

Figur 8 zeigt in einer perspektivischen Ansicht die Reinigungsvorrichtung 40 mit herausgenommenen Zahnrädern 51, 52, die beide auf einer Drehachse 53, 56 angeordnet sind. Auf der Drehachse 53, 56 befindet sich ferner eine Reinigungsbürste 54, 55, sodass die Fahrradkette von oben und unten und im Seitenbereich gereinigt werden kann. Die Drehachsen 53, 56 sind in dem Gehäuse 40 in Aufnahmen 57 arretiert, um eine Drehbewegung beim Durchlaufen der Fahrradkette über das Kettenzahnrad 50 zu ermöglichen. Es handelt sich in diesem Fall um eine kleinere kompakte Reinigungsvorrichtung 40 mit einer zweistufigen Reinigung.

Figur 9 zeigt in einer perspektivischen Ansicht die Reinigungsvorrichtung 40 mit einer Fahrradkette 58. Die Fahrradkette 58 wird in das geöffnete Gehäuse 41 eingelegt, nachdem der Klemmbügel 46 abgenommen und die beiden Gehäusehälfte 41a und 41b voneinander getrennt wurden. Nach dem Einlegen der Fahrradkette 58 werden die beiden Gehäuseteile 41a und 41b wieder zusammengeführt und mithilfe des Klemmbügels 46 eine Verriegelung der beiden Gehäusehälfte 41a und 41b vorgenommen. Der Klemmbügel 46 ist gleichzeitig als Haltegriff ausgebildet, und zwar in der Form, dass die Basis 59 des U-förmigen Klemmbügels 46 gegenüber dem Gehäuse 41 in einer abgehobenen Position angeordnet ist, sodass eine Handfläche hinter den Klemmbügel 46 geführt werden kann. Die Fahrradkette 58 kann in üblicher Form mithilfe der Pedalen durch die Reinigungsvorrichtung 40 bewegt werden, wenn beispielsweise das Fahrrad aufgehängt oder der hintere Reifen keinen Bodenkontakt besitzt.

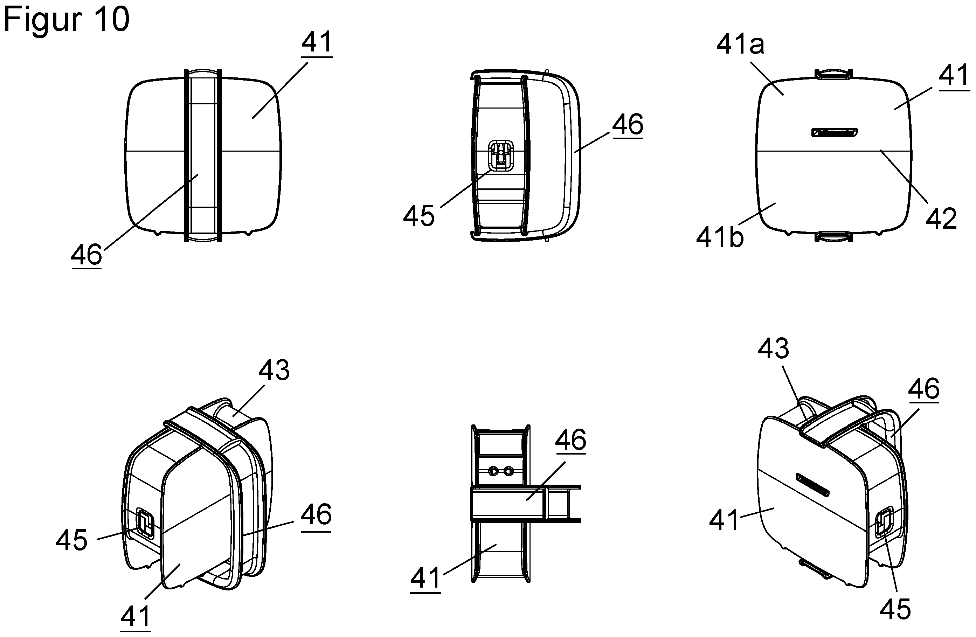

Figur 10 zeigt in insgesamt 6 Ansichten, und zwar zwei perspektivischen Ansichten und vier Seitenansichten nochmals die Reinigungsvorrichtung 40 in einer zusammengebauten Form.

### Bezugszeichenliste:

- 1: Reinigungsvorrichtung
- 2: Gehäuse
- 2a: Gehäusehälfte
- 2b: Gehäusehälfte
- 3: Trennungslinie
- 4: Klemmbügel
- 5: Aufnahme
- 6: Wölbung
- 7: Rolle
- 8: Öffnung
- 9: Flüssigkeitslevel
- 10: Eingangsöffnung
- 11: Ausgangsöffnung
- 12: Griff
- 13: Anformung
- 14: Rastnase
- 15: obere Rundung
- 16: untere Rundung
- 17: Erhebung
- 18: Aussparung
- 19: Ausnehmung
- 20: Fahrradkette
- 21: Steg
- 30: Kettenzahnrad
- 31: Zahnrad
- 32: Zahnrad
- 33: Zahnrad
- 34: Reinigungsbürste
- 35: Reinigungsbürste
- 40: Reinigungsvorrichtung
- 41: Gehäuse
- 41a: Gehäusehälfte
- 41b: Gehäusehälfte
- 42: Trennungslinie
- 43: Einfüllöffnung
- 44: Stirnfläche
- 45: Öffnung
- 46: Klemmbügel
- 47: Einrastvertiefung
- 48: äußere Kante
- 49: äußere Kante
- 50: Kettenzahnrad
- 51: Zahnrad
- 52: Zahnrad
- 53: Drehachse
- 54: Reinigungsbürste
- 55: Reinigungsbürste
- 56: Drehachse
- 57: Aufnahme
- 58: Fahrradkette
- 59: Basis

## Patentansprüche

1. Reinigungsvorrichtung (1, 40) für eine Antriebskette, insbesondere Fahrradkette (20, 58), umfassend zumindest ein Gehäuse (2, 41) mit zumindest einer Reinigungsbürste (34, 35, 54, 55), wobei die wenigstens eine Reinigungsbürste (34, 35, 54, 55) mit einem Kettenzahnrad (30, 50) gekoppelt ist, welches durch eine sich bewegende Antriebskette antreibbar ist, wobei das Kettenzahnrad (30, 50) mit einem weiteren Zahnrad (31) auf einer Welle gekoppelt ist,
**dadurch gekennzeichnet,**
**dass** das weitere Zahnrad (31) zum Antrieb zweier Zahnräder (32, 33) vorgesehen ist und mit diesen kämmt, welche synchron mit jeweils einer Reinigungsbürste (34, 35, 54, 55) gekoppelt sind.

2. Reinigungsvorrichtung (1, 40) nach Anspruch 1,
**dadurch gekennzeichnet,**
**dass** das wenigstens eine Zahnrad (31) mit einem weiteren Zahnrad gekoppelt ist, welches zum Antrieb zumindest einer weiteren Reinigungsbürste vorgesehen ist.

3. Reinigungsvorrichtung (1, 40) nach Anspruch 1 oder 2,
**dadurch gekennzeichnet,**
**dass** die Zahnräder (32, 33) und Reinigungsbürsten (34, 35, 54, 55) auf einer gemeinsamen Welle angeordnet sind.

4. Reinigungsvorrichtung (1, 40) nach einem der Ansprüche 1 bis 3,
**dadurch gekennzeichnet,**
**dass** zumindest eine Reinigungsbürste (34, 35, 54, 55) als Zahnrad (32, 33, 51, 52) mit einer Stirnradverzahnung ausgebildet ist.

5. Reinigungsvorrichtung (1, 40) nach einem der Ansprüche 1 bis 4,
**dadurch gekennzeichnet,**
**dass** das Kettenzahnrad (30, 50) eine doppelte Verzahnung aufweist, einmal für die Fahrradkette (20, 58) und einmal für zumindest ein gekoppeltes Zahnrad (32, 33, 51, 52)**.**

6. Reinigungsvorrichtung (1, 40) nach einem der Ansprüche 1 bis 5,
**dadurch gekennzeichnet,**
**dass** die Zahnräder (31, 32, 33) eine Stirnradverzahnung aufweisen.

7. Reinigungsvorrichtung (1, 40) nach einem der Ansprüche 1 bis 6,
**dadurch gekennzeichnet,**
**dass** das Gehäuse (2, 41) eine Ein- (10) und Ausgangsöffnung (11) für die Antriebskette aufweist.

8. Reinigungsvorrichtung (1, 40) nach einem der Ansprüche 1 bis 7,
**dadurch gekennzeichnet,**
**dass** das Gehäuse (2, 41) eine horizontale Trennungslinie (3, 42) besitzt.

9. Reinigungsvorrichtung (1, 40) nach einem der Ansprüche 1 bis 8,
**dadurch gekennzeichnet,**
**dass** das Gehäuse (2, 41) aus zwei Gehäusehälften (2a, 2b, 41a, 41b) besteht, welche auf einer gespannten Antriebskette aufsetzbar und miteinander verbindbar sind.

10. Reinigungsvorrichtung (1, 40) nach einem der Ansprüche 1 bis 9,
**dadurch gekennzeichnet,**
**dass** das Gehäuse (2, 41) einen Klemmbügel (4, 46) zur Verbindung der beiden Gehäusehälften (2a, 2b, 41a, 41b) aufweist.

11. Reinigungsvorrichtung (1, 40) nach einem der Ansprüche 1 bis 10,
**dadurch gekennzeichnet,**
**dass** das Gehäuse (2, 41) eine Aussparung für einen einsetzbaren Griff (12) aufweist.

12. Reinigungsvorrichtung (1, 40) nach einem der Ansprüche 1 bis 11**,**
**dadurch gekennzeichnet,**
**dass** das Gehäuse (2, 41) eine Öffnung (8, 45) zur Zuführung eines Reinigungsmittels und/oder eines Schmiermittels aufweist.

13. Reinigungsvorrichtung (1, 40) nach einem der Ansprüche 1 bis 12,
**dadurch gekennzeichnet,**
**dass** das Gehäuse (2, 41) eine zwei- oder dreistufige Anordnung der Reinigungsbürsten (34, 35, 54, 55) aufweist.

## Claims

1. Cleaning device (1, 40) for a drive chain, in particular a bicycle chain (20, 58), comprising at least one housing (2, 41) with at least one cleaning brush (34, 35, 54, 55), wherein the at least one cleaning brush (34, 35, 54, 55) is coupled to a sprocket wheel (30, 50) which is drivable by a moving drive chain, wherein the sprocket wheel (30, 50) is coupled to a further gear wheel (31) on a shaft, **characterized in that** the further gear wheel (31) is provided for driving two gear wheels (32, 33) and meshes with these, which are coupled synchronously to a cleaning brush (34, 35, 54, 55) in each case.

2. Cleaning device (1, 40) according to claim 1, **characterized in that** the at least one gear wheel (31) is coupled to a further gear wheel which is provided for driving at least one further cleaning brush.

3. Cleaning device (1, 40) according to claim 1 or 2, **characterized in that** the gear wheels (32, 33) and cleaning brushes (34, 35, 54, 55) are arranged on a common shaft.

4. Cleaning device (1, 40) according to one of the claims 1 to 3, **characterized in that** at least one cleaning brush (34, 35, 54, 55) is designed as a gear wheel (32, 33, 51, 52) having a spur gearing.

5. Cleaning device (1, 40) according to one of the claims 1 to 4, **characterized in that** the sprocket wheel (30, 50) has a double toothing, one for the bicycle chain (20, 58) and one for at least one coupled gear wheel (32, 33, 51, 52).

6. Cleaning device (1, 40) according to one of the claims 1 to 5, **characterized in that** the gears (31, 32, 33) have a spur gearing.

7. Cleaning device (1, 40) according to one of the claims 1 to 6, **characterized in that** the housing (2, 41) has an inlet opening (10) and an outlet opening (11) for the drive chain.

8. Cleaning device (1, 40) according to one of claims 1 to 7, **characterized in that** the housing (2, 41) has a horizontal separating line (3, 42).

9. Cleaning device (1, 40) according to one of claims 1 to 8, **characterized in that** the housing (2, 41) comprises two housing halves (2a, 2b, 41a, 41b) which can be placed on a tensioned drive chain and can be connected to each other.

10. Cleaning device (1, 40) according to one of claims 1 to 9, **characterized in that** the housing (2, 41) has a clamping bracket (4, 46) for connecting the two housing halves (2a, 2b, 41a, 41b).

11. Cleaning device (1, 40) according to one of claims 1 to 10, **characterized in in that** the housing (2, 41) has a recess for an insertable handle (12).

12. Cleaning device (1, 40) according to one of claims 1 to 11, **characterized in that** the housing (2, 41) has an opening (8, 45) for supplying a cleaning agent and/or a lubricant.

13. Cleaning device (1, 40) according to one of the claims 1 to 12, **characterized in that** the housing (2, 41) has a two- or three-stage arrangement of the cleaning brushes (34, 35, 54, 55).

## Revendications

1. Dispositif de nettoyage (1, 40) d'une chaîne d'entraînement, notamment d'une chaîne de vélo (20, 58), comportant au moins un carter (2, 41) comprenant au moins une brosse de nettoyage (34, 35, 54, 55), l'au moins une brosse de nettoyage (34, 35, 54, 55) étant couplée à un pignon à chaîne (30, 50) entraînable par une chaîne d'entraînement qui se déplace, le pignon à chaîne (30, 50) étant couplé à un pignon (31) supplémentaire sur un arbre, **caractérisé en ce que** le pignon supplémentaire (31) est prévu pour entraîner deux pignons (32, 33) en s'engrenant dans celles-ci qui sont couplés de manière synchrone à une brosse de nettoyage (34, 35, 54, 55) chacune.

2. Dispositif de nettoyage (1, 40) selon la revendication 1, **caractérisé en ce que** l'au moins un pignon (31) est couplé à un pignon supplémentaire prévu pour entraîner au moins une brosse de nettoyage supplémentaire.

3. Dispositif de nettoyage (1, 40) selon la revendication 1 ou 2, **caractérisé en ce que** les pignons (32, 33) et les brosses de nettoyage (34, 35, 54, 55) sont disposés sur un arbre commun.

4. Dispositif de nettoyage (1, 40) selon l'une des revendications 1 à 3, **caractérisé en ce qu'**au moins une brosse de nettoyage (34, 35, 54, 55) est prévue sous forme de pignon (32, 51, 52) à engrenage cylindrique.

5. Dispositif de nettoyage (1, 40) selon l'une des revendications 1 à 4, **caractérisé en ce que** le pignon à chaîne (30, 50) présente une denture double, d'une part pour la chaîne de vélo (20, 58) et d'autre part pour au moins un pignon (32, 33, 51, 52) couplé.

6. Dispositif de nettoyage (1, 40) selon l'une des revendications 1 à 5, **caractérisé en ce que** les pignons (31, 32, 33) présentent un engrenage cylindrique.

7. Dispositif de nettoyage (1, 40) selon l'une des revendications 1 à 6, **caractérisé en ce que** le carter (2, 41) présente une ouverture d'entrée (10) et une ouverture de sortie (11) de la chaîne d'entraînement.

8. Dispositif de nettoyage (1, 40) selon l'une des revendications 1 à 7, **caractérisé en ce que** le carter (2, 41) possède une ligne de séparation horizontale (3, 42).

9. Dispositif de nettoyage (1, 40) selon l'une des revendications 1 à 8, **caractérisé en ce que** le carter (2, 41) se compose de deux moitiés de carter (2a, 2b, 41a, 41b) susceptibles d'être posées sur une chaîne d'entraînement tendue et d'être reliées entre elles.

10. Dispositif de nettoyage (1, 40) selon l'une des revendications 1 à 9, **caractérisé en ce que** le carter (2, 41) présente un étrier de serrage (4, 46) pour relier les deux moitiés de carter (2a, 2b, 41a, 41b).

11. Dispositif de nettoyage (1, 40) selon l'une des revendications 1 à 10, **caractérisé en ce que** le carter (2, 41) présente un évidement pour une poignée (12) prévu pour y être inséré.

12. Dispositif de nettoyage (1, 40) selon l'une des revendications 1 à 11, **caractérisé en ce que** le carter (2, 41) présente une ouverture (8, 45) d'approvisionnement en détergent et/ou en lubrifiant.

13. Dispositif de nettoyage (1, 40) selon l'une des revendications 1 à 12, **caractérisé en ce que** le carter (2, 41) présente un arrangement des brosses de nettoyage (34, 35, 54, 55) à deux ou trois étages.
